# EUROPÄISCHE PATENTANMELDUNG

(11) **EP 4 799 827 A1**
(43) Veröffentlichungstag der Anmeldung: **02.09.2026**
(21) Anmeldenummer: 26155618.7
(22) Anmeldetag: 02.02.2026
(51) Int. Cl.: B60C 11/03, B60C 11/13

(54) **FAHRZEUGREIFEN, INSBESONDERE ALL-TERRAIN-REIFEN**

(30) Priorität: 28.02.2025 DE 102025107726
(71) Anmelder: Continental Reifen Deutschland GmbH, 30175 Hannover (DE)
(72) Erfinder: Herbst, Stephan, 30175 Hannover (DE); Behr, Ulrich, 30175 Hannover (DE); Javagal Suresh, Swaroop Sharma, 30175 Hannover (DE)
(74) Vertreter: Continental Corporation

(57) **Zusammenfassung**

Die Erfindung betrifft einen Fahrzeugreifen mit einem Laufstreifen (2) mit radial erhabenen Profilelementen (3), die durch mindestens zwei sich über den Umfang des Fahrzeugreifens (1) erstreckende Umfangsrillen (4, 5) sowie Schräg- und/oder Querrillen (6) getrennt sind, wobei die Schräg- und/oder Querrillen nach radial innen durch einen Rillengrund (7) und beiderseits des Rillengrundes (7) durch eine erste Rillenwand (8) und eine zweite Rillenwand (9) begrenzt sind, wobei am Rillengrund mindestens einer der Schräg- und/oder Querrillen ein Stabilisierungs- und Steinauswurfelement (10) angeordnet ist, das folgende Merkmale aufweist:
a) ein erster Abschnitt (10a), umfassend einen an der ersten Rillenwand (8) angeformten rampenförmigen ersten Steg (11) und einen an der zweiten Rillenwand (9) angeformten rampenförmigen zweiten Steg (12),
b) ein zweiter Abschnitt (10b), der an die erste Rillenwand (8) und an den ersten Steg (11) angeformt ist und sich bis in einen ersten Mündungsbereich (13) zwischen dieser Schräg- und/oder Querrille und einer daran angrenzenden ersten Umfangsrille (4) erstreckt, und
c) ein dritter Abschnitt (10c), der an die zweite Rillenwand (9) und an den zweiten Steg (12) angeformt ist und sich am dem ersten Mündungsbereich (13) gegenüberliegenden Ende der Schräg- und/oder Querrille bis in einen zweiten Mündungsbereich (14) zwischen der derselben Schräg- und/oder Querrille und einer daran angrenzenden zweiten Umfangsrille (5) erstreckt.

## Beschreibung

Die Erfindung betrifft einen Fahrzeugreifen, insbesondere einen All-Terrain-Reifen, mit einem Laufstreifen, der radial erhabene Profilelemente aufweist. Diese Profilelemente sind durch mindestens zwei sich über den Umfang des Fahrzeugreifens erstreckende Umfangsrillen sowie durch Schräg- und/oder Querrillen voneinander getrennt. Die Schräg- und/oder Querrillen münden in axialer Richtung in hintereinander angeordnete Umfangsrillen und sind in radialer Richtung nach innen hin durch einen Rillengrund sowie beiderseits durch eine erste und eine zweite Rillenwand begrenzt.

Aus dem Stand der Technik sind Subtiefenelemente in Profilrillen bekannt, die zur Unterstützung der Blocksteifigkeit und zur Verbesserung des Fahrverhaltens sowie der Verschleißfestigkeit eingesetzt werden. Ebenso werden bei All-Terrain-Reifen spezielle Elemente im Rillengrund verwendet, um das Einklemmen von Steinen zu verhindern und damit Schäden an Reifen, Gürtel und Karkasse zu reduzieren. Beide Ansätze reduzieren jedoch das Hohlraumvolumen im Profil, was sich nachteilig auf die Aquaplaning- sowie Schnee- und Matschtraktion auswirken kann. Ein wesentlicher Nachteil herkömmlicher Lösungen ist, dass entweder die Blockstabilisierung oder die Steinauswurffunktion im Vordergrund steht, wodurch Kompromisse in der Gesamtleistung des Reifens eingegangen werden müssen. Zudem kann eine Reduktion des Profilhohlraums die Nass- und Winterleistung des Reifens negativ beeinflussen.

Die Aufgabe der vorliegenden Erfindung besteht darin, einen Fahrzeugreifen bereitzustellen, der sowohl eine verbesserte Blocksteifigkeit für optimiertes Fahrverhalten und Verschleiß als auch eine zuverlässige Steinauswurffunktion gewährleistet, ohne dabei die Aquaplaning- und Schneeperformance erheblich zu beeinträchtigen. Die Aufgabe wird gelöst durch den Gegenstand von Patentanspruch 1. Bevorzugte Ausführungsformen sind Gegenstand der abhängigen Ansprüche.

Ein erfindungsgemäßer Fahrzeugreifen, insbesondere ein All-Terrain-Reifen, weist einen Laufstreifen mit radial erhabenen Profilelementen auf, die durch mindestens zwei sich über den Umfang des Fahrzeugreifens erstreckende Umfangsrillen sowie Schräg- und/oder Querrillen getrennt sind, wobei die Schräg- und/oder Querrillen in radialer Richtung nach innen hin durch einen Rillengrund und beiderseits des Rillengrundes durch eine erste Rillenwand und eine zweite Rillenwand begrenzt sind, wobei am Rillengrund mindestens einer der Schräg- und/oder Querrillen ein Stabilisierungs- und Steinauswurfelement angeordnet ist. Das Stabilisierungs- und Steinauswurfelement weist folgende Merkmale auf:
a) ein erster Abschnitt, umfassend einen an der ersten Rillenwand angeformten rampenförmigen ersten Steg und einen an der zweiten Rillenwand angeformten rampenförmigen zweiten Steg,
b) ein zweiter Abschnitt, der an den ersten Steg angeformt ist und sich bis in einen ersten Mündungsbereich zwischen der entsprechenden Schräg- und/oder Querrille und einer daran angrenzenden ersten Umfangsrille erstreckt, und
c) ein dritter Abschnitt, der an den zweiten Steg angeformt ist und sich am dem ersten Mündungsbereich gegenüberliegenden Ende der Schräg- und/oder Querrille der Schräg- und/oder Querrille bis in einen zweiten Mündungsbereich zwischen der derselben Schräg- und/oder Querrille und einer daran angrenzenden zweiten Umfangsrille erstreckt.

Jede Schräg- und/oder Querrille mündet in axialer Richtung des Fahrzeugreifens in nebeneinander bzw. hintereinander angeordnete Umfangsrillen.

Der erste Abschnitt des radial erhabenen, kombinierten Stabilisierungs- und Steinauswurfelements ist räumlich zwischen dem zweiten und dritten Abschnitt desselben Stabilisierungs- und Steinauswurfelements angeordnet. Der erste Abschnitt erstreckt sich in der Quer- bzw. Schrägrille zwischen zwei benachbarten Profilblöcken. Der erste Abschnitt dient zur Erhöhung der Blocksteifigkeit, wodurch das Fahrverhalten sowie der Verschleiß verbessert werden.

Der zweite Abschnitt und der dritte Abschnitt verkleinern das freie Profilvolumen und fungieren dadurch in dem jeweiligen Mündungsbereich als Steinauswurfelement, um das Einklemmen von Steinen im Profil zu verhindern und Schäden an Reifen, Gürtel und Karkasse zu reduzieren. Dabei unterstützt die Gestaltung der geneigten Flächen den Steinauswurf, indem eine gezielte Ableitung von eingeklemmten Partikeln aus der Rille ermöglicht wird.

Die Abmessungen der Abschnitte des kombinierten Stabilisierungs- und Steinauswurfelements sind variabel anpassbar, um eine optimale Balance zwischen Steifigkeit und Steinauswurfeffekt zu erreichen. Dies ermöglicht eine gezielte Anpassung an unterschiedliche Belastungszonen des Reifens und sorgt für eine gleichmäßige Abnutzung.

Ferner kann die Position und Anzahl der kombinierten Stabilisierungs- und Steinauswurfelemente entsprechend den Belastungszonen des Fahrzeugreifens angepasst werden, um eine optimale Performance in verschiedenen Fahrbedingungen zu gewährleisten.

Der Begriff "Mündungsbereich" bezeichnet den Übergangsabschnitt zwischen einer Schräg- oder Querrille und einer angrenzenden Umfangsrille. In diesem Bereich können Fremdkörper wie Steine besonders leicht eingeklemmt werden, weshalb eine gezielte Gestaltung erforderlich ist, um einen effektiven Steinauswurf zu ermöglichen. Der Mündungsbereich stellt also im Fahrzeugreifen die Verbindung bzw. den Übergang zwischen zwei Rillen, hier einer Schräg- bzw. Querrille und einer Umfangsrille, dar. Da der Mündungsbereich typischerweise stark beansprucht wird, kann seine Formgebung gezielt angepasst werden, um Ablagerungen von Fremdkörpern zu minimieren und die Selbstreinigungseigenschaften des Profils zu verbessern.

Neben den Schräg- bzw. Querrillen ist auch die jeweilige Umfangsrille in radialer Richtung nach innen hin durch einen Rillengrund und beiderseits des Rillengrundes jeweils durch eine Rillenwand begrenzt.

Das Stabilisierungs- und Steinauswurfelement ist so ausgeführt, dass es die Hohlraumreduktion im Profil minimiert, wodurch die Aquaplaning- und Schneeperformance weniger beeinträchtigt wird. Das Stabilisierungs- und Steinauswurfelement weist eine optimierte Geometrie mit mehrfachen Kanten und Übergängen auf, wodurch die Schnee- und Matschtraktion weiter verbessert wird.

Das Stabilisierungs- und Steinauswurfelement erstreckt sich bevorzugt entlang der gesamten Länge der Schräg- bzw. Querrille, um eine gleichmäßige Lastverteilung und eine gleichmäßige Abnutzung des Reifens zu gewährleisten. Das jeweilige Stabilisierungs- und Steinauswurfelement hat für den Fahrzeugreifen einen selbstreinigenden Effekt, indem es eine gerichtete Bewegung eingeklemmter Partikel aus der Profilrille heraus erzeugen.

Vorteilhaft umfasst der Fahrzeugreifen mehrere Schräg- und/oder Querrillen, in denen jeweils mindestens ein Stabilisierungs- und Steinauswurfelement angeordnet ist.

Bevorzugt sind die beiden Stege des ersten Abschnitts des jeweiligen Stabilisierungs- und Steinauswurfelements gegenläufig steigend ausgebildet. Anders gesagt weisen die Steinauswurfabschnitte gegenläufig geneigte Oberflächen auf, wodurch eine verbesserte Auswurfwirkung erzielt wird. Die Stege weisen jeweils entgegengesetzte Anstiegswinkel auf, wodurch zusätzliche Greifkanten zur Verbesserung der Traktion auf Schnee und Schlamm entstehen. Die Winkel der geneigten Oberflächen der Stege sind so gewählt, dass ein optimierter Steinabwurf erfolgt.

Nach einer Ausführungsform ist eine erste Flanke des zweiten Abschnitts des jeweiligen Stabilisierungs- und Steinauswurfelements bei Querschnittsbetrachtung der jeweiligen Schräg- und/oder Querrille mit einem ersten Winkel zwischen 30° und 65°, vorzugsweise zwischen 35° und 60°, bevorzugt zwischen 39° und 57°, zu einer Mittelebene dieser Schräg- und/oder Querrille angeordnet.

Die Mittelebene einer Schräg- oder Querrille ist eine gedachte, vertikale Ebene, die die Rille mittig in zwei im Wesentlichen symmetrische Hälften teilt. Sie dient als Bezugsebene für die Winkelangaben von Rillenwänden, Stegen und Flanken und ermöglicht eine präzise geometrische Definition der Profilgestaltung. Sie verläuft in der Regel senkrecht zur Lauffläche des Fahrzeugreifens und im Wesentlichen mittig zwischen den beiden Rillenwänden der Schräg- bzw. Querrille.

Der erste Winkel der ersten Flanke des zweiten Abschnitts variiert entlang der Schräg- und/oder Querrille. Diese Variation ermöglicht eine gleichmäßige Steifigkeitsverteilung und optimiert das Steinauswurfsystem, indem unterschiedliche Belastungssituationen berücksichtigt werden.

Alternativ oder ergänzend ist eine erste Flanke des dritten Abschnitts des jeweiligen Stabilisierungs- und Steinauswurfelements bei Querschnittsbetrachtung der jeweiligen Schräg- und/oder Querrille mit einem zweiten Winkel zwischen 35° und 75°, vorzugsweise zwischen 40° und 70°, bevorzugt zwischen 44° und 66°, zu einer Mittelebene dieser Schräg- und/oder Querrille angeordnet.

Vorteilhaft variiert der zweite Winkel der ersten Flanke des dritten Abschnitts entlang der zugehörigen Schräg- und/oder Querrille. Dadurch wird eine harmonische Steifigkeitsverteilung im Profil erzielt und die Anpassung an unterschiedliche Belastungssituationen wird ermöglicht.

Vorzugsweise weisen die Stege des ersten Abschnitts des jeweiligen Stabilisierungs- und Steinauswurfelements jeweils eine variable Breite auf. Damit können unterschiedliche Anforderungen an Traktion, Steifigkeit und Steinabwurf erfüllt werden.

Bevorzugt ist die jeweilige Rillenwand bei Querschnittsbetrachtung der jeweiligen Schräg- und/oder Querrille mit einem Winkel zwischen 5° und 15°, vorzugsweise zwischen 7° und 13°, bevorzugt zwischen 8° und 12°, zu einer Mittelebene dieser Schräg- und/oder Querrille angeordnet.

Nach einem Ausführungsbeispiel ist eine nach radial außen gerichtete Oberseite des ersten und/oder zweiten Stegs des jeweiligen Stabilisierungs- und Steinauswurfelements bei Querschnittsbetrachtung der jeweiligen Schräg- und/oder Querrille mit einem Winkel zwischen 40° und 70°, vorzugsweise zwischen 42° und 67°, bevorzugt zwischen 44° und 64°, zu einer Mittelebene dieser Schräg- und/oder Querrille angeordnet. Vorteilhaft variiert der dieser Winkel der jeweiligen Oberseite des ersten bzw. zweiten Stegs entlang der zugehörigen Schräg- und/oder Querrille.

Vorzugsweise beträgt eine Höhe des ersten Abschnitts des jeweiligen Stabilisierungs- und Steinauswurfelements höchstens 75%, bevorzugt höchstens 70%, ferner bevorzugt zwischen 50% und 64% der Profiltiefe der zugehörigen jeweiligen Schräg- und/oder Querrille.

Alternativ oder ergänzend beträgt eine Höhe des zweiten Abschnitts des jeweiligen Stabilisierungs- und Steinauswurfelements höchstens 75%, bevorzugt höchstens 70%, ferner bevorzugt zwischen 55% und 67% der Profiltiefe der zugehörigen jeweiligen Schräg- und/oder Querrille.

Ferner alternativ oder ergänzend beträgt eine Höhe des dritten Abschnitts des jeweiligen Stabilisierungs- und Steinauswurfelements höchstens 75%, bevorzugt höchstens 70%, ferner bevorzugt zwischen 50% und 62% der Profiltiefe der zugehörigen jeweiligen Schräg- und/oder Querrille.

Im Folgenden wird ein Ausführungsbeispiel der Erfindung anhand der Zeichnungen näher erläutert. Gleiche oder ähnliche Elemente sind dabei mit dem gleichen Bezugszeichen versehen. Es zeigt
- Fig. 1: eine schematische Draufsicht eines Umfangsabschnitts eines Laufstreifens eines erfindungsgemäßen Fahrzeugreifens gemäß einer ersten Ausführungsform,
- Fig. 2: eine schematische Draufsicht eines Abschnitts des Laufstreifens des erfindungsgemäßen Fahrzeugreifens nach Figur 1,
- Fig. 3: eine schematische Perspektivdarstellung einer Schrägrille zwischen zwei Profilblöcken des Laufstreifens des erfindungsgemäßen Fahrzeugreifens nach Figur 1 und Figur 2,
- Fig. 4: eine erste schematische Schnittdarstellung A-A der Schrägrille nach Figur 3,
- Fig. 5: eine zweite schematische Schnittdarstellung F-F der Schrägrille nach Figur 3 und Figur 4,
- Fig. 6: eine dritte schematische Schnittdarstellung G-G der Schrägrille nach Figur 3 bis Figur 5,
- Fig. 7: eine vierte schematische Schnittdarstellung D-D der Schrägrille nach Figur 3 bis Figur 6,
- Fig. 8: eine fünfte schematische Schnittdarstellung C-C der Schrägrille nach Figur 3 bis Figur 7, und
- Fig. 9: eine sechste schematische Schnittdarstellung D-D der Schrägrille nach Figur 3 bis Figur 8.

Gemäß der Erfindung ausgeführte Fahrzeugreifen 1 sind Reifen für Kraftfahrzeuge, insbesondere für mehrspurige Kraftfahrzeuge, vorzugsweise PKW-Reifen für Offroad-Anwendungen. Ein hierin beschriebener Fahrzeugreifen 1 eignet sich vorteilhaft für den Einsatz als All-Terrain-Reifen, insbesondere als SUV-Reifen (Sport Utility Vehicle) oder LT-Reifen (Light Truck). Fahrzeugreifen 1 gemäß der Erfindung umfassen insbesondere mit Druckluft gefüllte Luftreifen, Vollreifen ohne Luftfüllung sowie Sonderreifen mit Federelementen oder Segmentreifen aus mehreren austauschbaren Segmenten. Der hierin beschriebene Fahrzeugreifen 1 weist eine Profiltiefe 25 zwischen 8 und 18 mm auf, vorliegend etwa 12 mm.

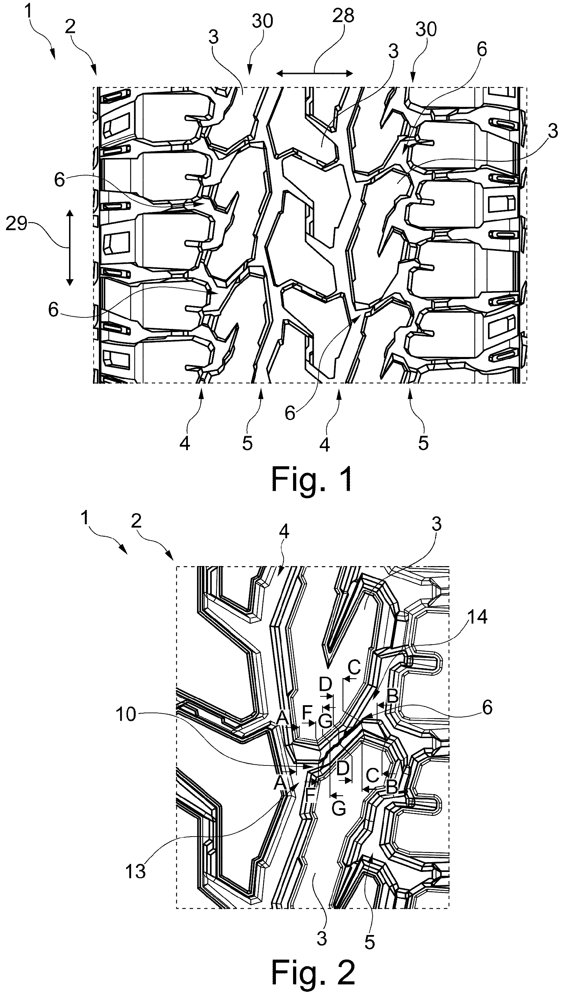

Der Fahrzeugreifen 1 weist nach Figur 1 und Figur 2 einen Laufstreifen 2 mit in axialer Richtung 28 sowie in Umfangsrichtung 29 jeweils hintereinander angeordneten, radial erhabenen Profilelementen 3 auf. Die Profilelemente 3 sind durch mehrere sich über den Umfang des Fahrzeugreifens 1 erstreckende Umfangsrillen 4, 5 sowie Schrägrillen 6 voneinander getrennt. Je eine Schrägrille 6 erstreckt sich zwischen zwei in axialer Richtung 28 des Fahrzeugreifens hintereinander angeordneten Umfangsrillen 4, 5.

Figur 2 zeigt einen Teilabschnitt des Laufstreifens des erfindungsgemäßen Fahrzeugreifens 1, wobei in dieser Darstellung die Profilelemente 3, auch Profilblöcke genannt, sowie die zwischen ihnen verlaufenden Schräg- und Umfangsrillen 4, 5, 6 erkennbar.

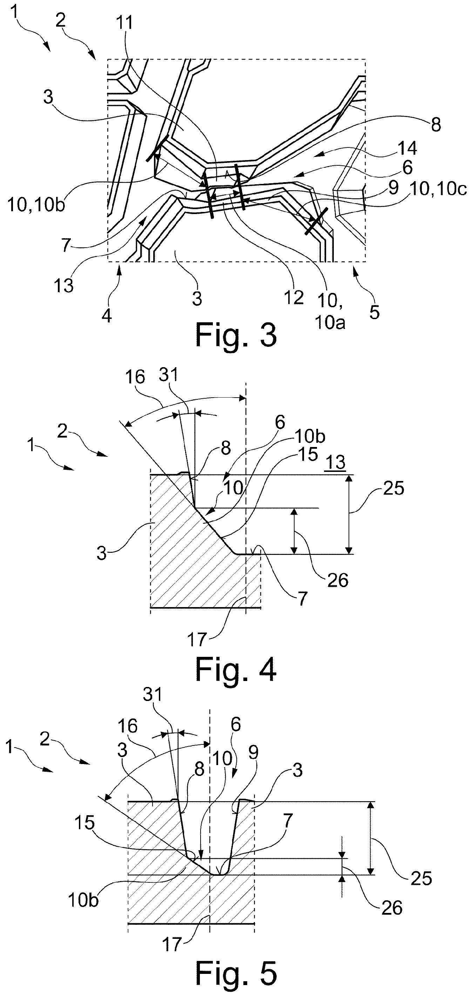

Figur 3 in Verbindung mit den Figuren 4 bis 10 zeigt die Geometrie der Schrägrille 6. Diese ist in radialer Richtung nach innen durch den Rillengrund 7 begrenzt, während sie seitlich durch eine erste Rillenwand 8 und eine zweite Rillenwand 9 definiert wird. Die Schrägrille 6 wird durch eine Mittelebene 17 gedanklich zweigeteilt. Die Übergänge zwischen dem Rillengrund 7 und den Rillenwänden 8, 9 sowie andere Ecken oder Kanten können abgerundet, das heißt mit einem Radius versehen sein. Dies sei hier lediglich angemerkt, ohne näher darauf einzugehen oder dies im Detail zu zeigen.

Wie in Figur 1 in Verbindung mit den Figuren 2 und 4 bis 10 dargestellt, ist am Rillengrund 7 jeder Schrägrille 6 einer Zwischenblockreihe 30 ein Stabilisierungs- und Steinauswurfelement 10 angeordnet. Dieses erstreckt sich, wie in Figur 2 zu erkennen, zwischen einem ersten Mündungsbereich 13 und einem zweiten Mündungsbereich 14. Der erste Mündungsbereich 13 ist die Einmündung der Schrägrille 6 in die Umfangsrille mit dem Bezugszeichen 4 und der zweite Mündungsbereich 14 ist die Einmündung der Schrägrille 6 in die Umfangsrille mit dem Bezugszeichen 5. Der Mündungsbereich 13, 14 ist neben den Umfangsrillen 4, 5, den Schrägrillen und weiteren Rillen als freie Profilfläche des Laufstreifens 2 zu verstehen.

Das Stabilisierungs- und Steinauswurfelement 10 ist nach Figur 3 in drei Abschnitte 10a, 10b, 10c unterteilt. Der erste Abschnitt 10a ist der mittlere Abschnitt zwischen dem zweiten und dritten Abschnitt 10b, 10c. Der erste Abschnitt 10a dient als Blockstabilisator zur Erhöhung der Steifigkeit, wodurch Handling und Verschleißbild verbessert werden. Der zweite und dritte Abschnitt 10b, 10c dienen im jeweiligen Mündungsbereich 13, 14 jeweils als Steinauswurfelement zur Vermeidung von Steineinschlüssen und Reifenschäden.

Während der erste Abschnitt 10a beiden in Umfangsrichtung 29 benachbarten Profilelementen 3 zugeordnet ist, ist nach Figur 3 der zweite Abschnitt 10b dem oberen Profilelement 3 und der dritte Abschnitt 10c dem unteren Profilelement 3 zugeordnet.

Der erste Abschnitt 10a umfasst nach Figur 3 einen rampenförmigen ersten Steg 11, der an der ersten Rillenwand 8 des - hier oben dargestellten - Profilelements 3 angeformt ist. Ein zweiter rampenförmiger Steg 12 ist gegenüberliegend an der zweiten Rillenwand 9 des - hier unten dargestellten - Profilelements 3 angeformt. Diese Anordnung stabilisiert die Profilblöcke und trägt zur Verbesserung der Steifigkeit bei. Die Stege 11, 12 des ersten Abschnitts 10a des jeweiligen Stabilisierungs- und Steinauswurfelements 10 können jeweils eine variable Breite aufweisen.

Der erste Abschnitt 10a ist so ausgeführt, dass er die Blocksteifigkeit der Profilelemente 3 der Zwischenblockreihen 30 erhöht, wodurch das Fahrverhalten des Fahrzeugreifens 1 verbessert und der Verschleiß reduziert werden. Insbesondere sorgt die Verbindung der beiden Stege 11, 12 mit den jeweiligen Rillenwänden 8, 9 für eine stabilisierende Wirkung der Profilblöcke, was zu einer gleichmäßigeren Kraftverteilung im Laufstreifen 2 führt.

Der zweite Abschnitt 10b ist an die erste Rillenwand 8 sowie an den ersten Steg 11 angeformt und erstreckt sich ausgehend vom ersten Abschnitt 10a bis in den ersten Mündungsbereich 13 zwischen der entsprechenden Schrägrille 6 und der daran angrenzenden ersten Umfangsrille 4.

Der dritte Abschnitt 10c ist an die zweite Rillenwand 9 sowie an den zweiten Steg 12 angeformt und erstreckt sich an einer dem ersten Mündungsbereich 13 entgegengesetzten Ende der Schrägrille 6 bis in den zweiten Mündungsbereich 14 zwischen der derselben Schrägrille 6 und der daran angrenzenden zweiten Umfangsrille 5.

Der zweite Abschnitt 10b und der dritte Abschnitt 10c sind jeweils so gestaltet, dass sie das Einklemmen von Steinen in der Schrägrille 6 verhindern. Durch diese Anordnung wird sichergestellt, dass Fremdkörper, die in die Schrägrille 6 eindringen, bei der Rotation des Fahrzeugreifens 1 durch die auf sie einwirkenden Kräfte nach außen transportiert werden.

Figur 4 und Figur 5 zeigen Querschnitte des zweiten Abschnitts 10b des Stabilisierungs- und Steinauswurfelements 10 im ersten Mündungsbereich 13. Figur 4 stellt den Schnitt A-A und Figur 5 den Schnitt F-F gemäß Figur 2 dar.

Nach Figur 4 ist eine erste Flanke 15 des zweiten Abschnitts 10b mit einem ersten Winkel 16 zwischen 30° und 65° zu einer Mittelebene 17 dieser Schrägrille 6, hier beispielsweise 54°, angeordnet. Der erste Winkel 16 der geneigten ersten Flanke 15 des zweiten Abschnitts 10b ist so gewählt, dass der Steinauswurf optimiert wird.

Die hier gezeigte erste Rillenwand 8 ist zudem mit einem Winkel 31 zwischen 5° und 15°, hier beispielsweise etwa 8°, zur Mittelebene 17 der Schrägrille 6 angeordnet. Dies gilt für alle Figuren 4 bis 9.

Figur 5 soll verdeutlichen, dass der erste Winkel 16 der ersten Flanke 15 entlang des zweiten Abschnitts 10b, also von dessen Beginn bis zum ersten Abschnitt 10a, variieren kann. An dieser Längsposition des zweiten Abschnitts 10b ist der erste Winkel 16 kleiner als an der in Figur 4 gezeigten Längsposition des zweiten Abschnitts 10b. Im Übrigen wird auf die Ausführungen zu Figur 4 verwiesen.

Für die Figuren 4 und 5 gilt, dass eine Höhe 26 des zweiten Abschnitts 10b höchstens 75% von der Profiltiefe 25 der Schrägrille 6 beträgt, um ein optimales Verhältnis zwischen Stabilisierung und Steinauswurf zu gewährleisten.

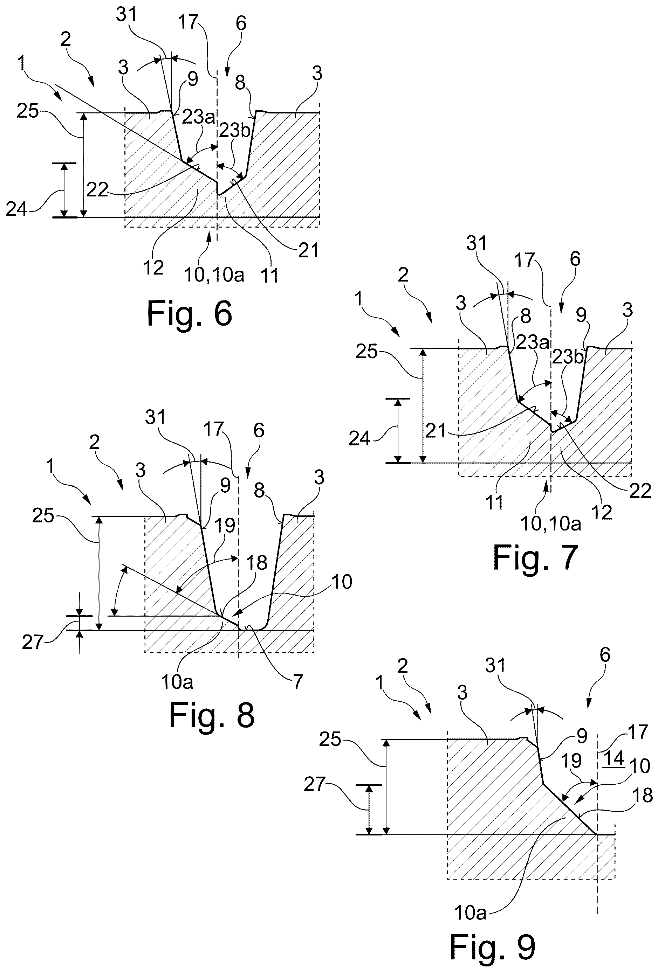

Die Figuren 6 und 7 zeigen zwei Querschnitte durch den ersten Abschnitt 10a des Stabilisierungs- und Steinauswurfelements 10, nämlich den Schnitt G-G sowie den Schnitt D-D gemäß Figur 2.

Die Figuren 6 und 7 veranschaulichen die variable Höhe der Stege 11, 12 über die Längserstreckung des ersten Abschnitts 10a. Die beiden Stege 11, 12 sind vorliegend gegenläufig steigend ausgebildet. Dies führt dazu, dass sich in Querschnittsbetrachtung der Schrägrille 6 ein spaltförmiger Bereich zwischen den beiden Stegen 11, 12 ergibt.

Je nach Längsposition des ersten Abschnitts 10a ergibt sich in Verbindung mit den nach radial außen gerichteten, geneigten Oberflächen bzw. Oberseiten 21, 22 der Stege 11, 12 eine stufenartige Ausgestaltung des ersten Abschnitts 10a. Die Oberseite 21 bzw. radiale Außenfläche des ersten Stegs 11 und die Oberseite 22 bzw. radiale Außenfläche des zweiten Stegs 12 ist jeweils mit einem dritten Winkel 23a, 23b zwischen 40° und 70°, hier etwa 58°, zur Mittelebene 17 dieser Schrägrille 6 angeordnet. Dadurch ergibt sich eine V-förmige Ausgestaltung der Schrägrille 6 im ersten Abschnitts 10a. Der jeweilige dritte Winkel 23a und 23b kann betragsmäßig gleich groß sein. Wie aus Figur 7 hervorgeht, kann dieser dritte Winkel 23a, 23b der Oberseiten 21, 22 auch entlang der zugehörigen Schrägrille 6 bzw. des ersten Abschnitts 10a variieren.

Die Anordnung der Stege 11, 12 trägt aufgrund der gegenläufig steigenden Ausgestaltung ferner zur Bildung zusätzlicher Greifkanten bei, die die Traktion des Fahrzeugreifens 1 auf losem Untergrund, wie Schnee oder Schlamm, verbessern.

Eine Höhe des ersten Abschnitts 10a beträgt höchstens 75% der Profiltiefe 25 der Schrägrille 6, wobei durch eine Abstufung der Höhe eine gezielte Anpassung an unterschiedliche Belastungsbereiche ermöglicht wird.

Figur 8 und Figur 9 zeigen Querschnitte des dritten Abschnitts 10c des Stabilisierungs- und Steinauswurfelements 10 im zweiten Mündungsbereich 14. Figur 8 stellt den Schnitt C-C und Figur 9 den Schnitt B-B gemäß Figur 2 dar.

Nach Figur 8 ist eine erste Flanke 18 des dritten Abschnitts 10c mit einem zweiten Winkel 19 zwischen 35° und 75° zur Mittelebene 17 der Schrägrille 6, hier beispielsweise etwa 62°, angeordnet. Der zweite Winkel 19 der geneigten ersten Flanke 18 des dritten Abschnitts 10c ist so gewählt, dass der Steinauswurf optimiert wird.

Figur 9 soll verdeutlichen, dass der zweite Winkel 19 der ersten Flanke 18 entlang des dritten Abschnitts 10c, also von dessen Beginn bis zum ersten Abschnitt 10a, variieren kann. An dieser Längsposition des dritten Abschnitts 10c ist der zweite Winkel 19 größer als an der in Figur 8 gezeigten Längsposition des dritten Abschnitts 10c.

Für die Figuren 8 und 9 gilt, dass eine Höhe 27 des dritten Abschnitts 10c höchstens 75% von der Profiltiefe 25 der Schrägrille 6 beträgt, um ein optimales Verhältnis zwischen Stabilisierung und Steinauswurf zu gewährleisten.

Durch die spezifische Geometrie des Stabilisierungs- und Steinauswurfelements 10, insbesondere durch die Kombination der Stege 11, 12 mit den geneigten Flächen des zweiten und dritten Abschnitts 10b, 10c, ergibt sich eine verbesserte Balance zwischen Blocksteifigkeit und Steinauswurffunktion. Die erfindungsgemäße Gestaltung sorgt somit nicht nur für eine Reduktion der Hohlraumverringerung im Profil, sondern gewährleistet gleichzeitig eine verbesserte Aquaplaning- und Schneeperformance sowie eine gleichmäßige Abnutzung des Laufstreifens 2.

Selbstverständlich ist denkbar, dass ein Teil oder alle Schrägrillen 6 als Querrillen ausgestaltet sind. Dies hängt im Wesentlichen von der Geometrie der Profilelemente 3 ab.

### Bezugszeichenliste

- 1: Fahrzeugreifen
- 2: Laufstreifen
- 3: Profilelement
- 4: Erste Umfangsrille
- 5: Zweite Umfangsrille
- 6: Schräg- oder Querrille
- 7: Rillengrund
- 8: Erste Rillenwand
- 9: Zweite Rillenwand
- 10: Stabilisierungs- und Steinauswurfelement
- 10a - 10c: Abschnitt des Stabilisierungs- und Steinauswurfelements
- 11: Erster Steg
- 12: Zweiter Steg
- 13: Erster Mündungsbereich
- 14: Zweiter Mündungsbereich
- 15: Erste Flanke des zweiten Abschnitts
- 16: Erster Winkel
- 17: Mittelebene der Schräg- oder Querrille
- 18: Erste Flanke des dritten Abschnitts
- 19: Zweiter Winkel
- 20: Spalt
- 21: Oberseite des ersten Steges
- 22: Oberseite des zweiten Steges
- 23a, 23b: Dritter Winkel
- 24: Höhe des ersten Abschnitts
- 25: Profiltiefe der Schräg- oder Querrille
- 26: Höhe des zweiten Abschnitts
- 27: Höhe des dritten Abschnitts
- 28: Axiale Richtung
- 29: Umfangsrichtung
- 30: Zwischenblockreihe
- 31: Vierter Winkel

## Patentansprüche

1. Fahrzeugreifen (1), insbesondere All-Terrain-Reifen, aufweisend einen Laufstreifen (2) mit radial erhabenen Profilelementen (3), die durch mindestens zwei sich über den Umfang des Fahrzeugreifens (1) erstreckende Umfangsrillen (4, 5) sowie Schräg- und/oder Querrillen (6) getrennt sind, wobei die Schräg- und/oder Querrillen (6) in radialer Richtung nach innen hin durch einen Rillengrund (7) und beiderseits des Rillengrundes (7) durch eine erste Rillenwand (8) und eine zweite Rillenwand (9) begrenzt sind, **dadurch gekennzeichnet, dass** am Rillengrund (7) mindestens einer der Schräg- und/oder Querrillen (6) ein Stabilisierungs- und Steinauswurfelement (10) angeordnet ist, das folgende Merkmale aufweist:
a) ein erster Abschnitt (10a), umfassend einen an der ersten Rillenwand (8) angeformten rampenförmigen ersten Steg (11) und einen an der zweiten Rillenwand (9) angeformten rampenförmigen zweiten Steg (12),
b) ein zweiter Abschnitt (10b), der an die erste Rillenwand (8) und an den ersten Steg (11) angeformt ist und sich bis in einen ersten Mündungsbereich (13) zwischen der entsprechenden Schräg- und/oder Querrille (6) und einer daran angrenzenden ersten Umfangsrille (4) erstreckt, und
c) ein dritter Abschnitt (10c), der an die zweite Rillenwand (9) und an den zweiten Steg (12) angeformt ist und sich am dem ersten Mündungsbereich (13) gegenüberliegenden Ende der Schräg- und/oder Querrille (6) bis in einen zweiten Mündungsbereich (14) zwischen dieser Schräg- und/oder Querrille (6) und einer daran angrenzenden zweiten Umfangsrille (5) erstreckt.

2. Fahrzeugreifen (1) nach Anspruch 1, **dadurch gekennzeichnet, dass** in mehreren Schräg- und/oder Querrillen (6) jeweils ein Stabilisierungs- und Steinauswurfelement (10) angeordnet ist.

3. Fahrzeugreifen (1) nach Anspruch 1 oder Anspruch 2, **dadurch gekennzeichnet, dass** die beiden Stege (11, 12) des ersten Abschnitts (10a) des jeweiligen Stabilisierungs- und Steinauswurfelements (10) gegenläufig steigend ausgebildet sind.

4. Fahrzeugreifen (1) nach einem der vorhergehenden Ansprüche, **dadurch gekennzeichnet, dass** eine erste Flanke (15) des zweiten Abschnitts (10b) des jeweiligen Stabilisierungs- und Steinauswurfelements (10) bei Querschnittsbetrachtung der jeweiligen Schräg- und/oder Querrille (6) mit einem ersten Winkel (16) zwischen 30° und 65° zu einer Mittelebene (17) dieser Schräg- und/oder Querrille (6) angeordnet ist.

5. Fahrzeugreifen (1) nach Anspruch 4, **dadurch gekennzeichnet, dass** der erste Winkel (16) der ersten Flanke (15) des zweiten Abschnitts (10b) entlang der zugehörigen Schräg- und/oder Querrille (6) variiert.

6. Fahrzeugreifen (1) nach einem der vorhergehenden Ansprüche, **dadurch gekennzeichnet, dass** eine erste Flanke (18) des dritten Abschnitts (10c) des jeweiligen Stabilisierungs- und Steinauswurfelements (10) bei Querschnittsbetrachtung der Schräg- und/oder Querrille (6) mit einem zweiten Winkel (19) zwischen 35° und 75° zur Mittelebene (17) dieser Rille (6) angeordnet ist.

7. Fahrzeugreifen (1) nach Anspruch 6, **dadurch gekennzeichnet, dass** der zweite Winkel (19) der ersten Flanke (18) des dritten Abschnitts (10c) entlang der zugehörigen Schräg- und/oder Querrille (6) variiert.

8. Fahrzeugreifen (1) nach einem der vorhergehenden Ansprüche, **dadurch gekennzeichnet, dass** die Stege (11, 12) des ersten Abschnitts (10a) des Stabilisierungs- und Steinauswurfelements (10) jeweils eine variable Breite aufweisen.

9. Fahrzeugreifen (1) nach einem der vorhergehenden Ansprüche, **dadurch gekennzeichnet, dass** die Rillenwand (8, 9) bei Querschnittsbetrachtung der Schräg- und/oder Querrille (6) mit einem Winkel (31) zwischen 5° und 15° zur Mittelebene (17) dieser Rille (6) angeordnet ist.

10. Fahrzeugreifen (1) nach einem der vorhergehenden Ansprüche, **dadurch gekennzeichnet, dass** eine nach radial außen gerichtete Oberseite (21, 22) des ersten und/oder zweiten Stegs (11, 12) des Stabilisierungs- und Steinauswurfelements (10) bei Querschnittsbetrachtung der Schräg- und/oder Querrille (6) mit einem Winkel (23a, 23b) zwischen 40° und 70° zur Mittelebene (17) dieser Rille (6) angeordnet ist.

11. Fahrzeugreifen (1) nach Anspruch 10, **dadurch gekennzeichnet, dass** der Winkel (23a, 23b) der jeweiligen Oberseite (21, 22) des ersten und/oder zweiten Stegs (11, 12) entlang der zugehörigen Schräg- und/oder Querrille (6) variiert.

12. Fahrzeugreifen (1) nach einem der vorhergehenden Ansprüche, **dadurch gekennzeichnet, dass** eine Höhe (24) des ersten Abschnitts (10a) des Stabilisierungs- und Steinauswurfelements (10) höchstens 75% einer Profiltiefe (25) der zugehörigen Schräg- und/oder Querrille (6) beträgt.

13. Fahrzeugreifen (1) nach einem der vorhergehenden Ansprüche, **dadurch gekennzeichnet, dass** eine Höhe (26) des zweiten Abschnitts (10b) des Stabilisierungs- und Steinauswurfelements (10) höchstens 75% der Profiltiefe (25) der zugehörigen Schräg- und/oder Querrille (6) beträgt.

14. Fahrzeugreifen (1) nach einem der vorhergehenden Ansprüche, **dadurch gekennzeichnet, dass** eine Höhe (27) des dritten Abschnitts (10c) des Stabilisierungs- und Steinauswurfelements (10) höchstens 75% der Profiltiefe (25) der zugehörigen Schräg- und/oder Querrille (6) beträgt.
